# FASCICULE DE BREVET EUROPEEN

(11) **EP 0 871 342 B1**
(45) Date de publication et mention de la délivrance du brevet: **05.04.2006**
(21) Numéro de dépôt: 98400868.0
(22) Date de dépôt: 09.04.1998
(51) Int. Cl.: H04Q 7/38, H04Q 7/32, G01S 5/14

(54) **Station mobile intégrant des fonctions de radiocommunication et de localisation, et procédé correspondant**
Mobilstation mit integrierten Funkübertragungs- und Lokalisierungs-Funktionen und Verfahren dafür
Mobile station integrating radio communication and localisation functions and method therefor

(30) Priorité: 10.04.1997 FR 9704402
(43) Date de publication de la demande: 14.10.1998
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Varin, Joel, 95520 Osny (FR)
(74) Mandataire: Feray, Valérie

(56) Documents cités:
- EP-A- 0 748 081
- EP-A- 0 748 727
- WO-A-94/12892
- WO-A-97/14056
- US-A- 5 301 368

## Description

Le domaine de l'invention est celui de la localisation géographique de stations mobiles d'un système de radiocommunication cellulaire numérique, du type fonctionnant selon un mode d'accès multiple à répartition dans le temps (AMRT).

Le système de radiocommunication cellulaire numérique auquel appartient la station mobile discutée ici est par exemple du type GSM (Groupe Spécial Mobiles public de radiocommunication) ou PCN (Personal Communication Networks).

On rappelle que la station mobile est l'équipement physique utilisé par l'usager d'un système de radiocommunication cellulaire numérique pour accéder aux services de télécommmunication offerts. Généralement, on distingue trois types de station mobile, à savoir les stations montées en véhicule, les stations portables et les terminaux portatifs.

Plus précisément, l'invention concerne une station mobile intégrant des fonctions de radiocommunication et de localisation.

L'invention a de nombreuses applications, telles que par exemple la localisation des stations mobiles volées (et même la localisation des véhicules volés dans le cas où les stations mobiles sont fixées aux véhicules).

Plus généralement, l'invention peut s'appliquer dans tous les cas où l'on souhaite pouvoir localiser géographiquement une station mobile à un instant donné.

Dans la suite de la description, on présente l'état de la technique connu essentiellement à travers les terminaux portatifs connus. Il est clair que cette discussion peut être généralisée à n'importe quel type de station mobile. On rappelle en effet que la présente invention s'applique avec n'importe quel type de station mobile, et non pas uniquement avec un terminal portatif.

On connaît, dans l'état de la technique, plusieurs techniques permettant d'intégrer des fonctions de radiocommunication et de localisation dans un terminal portatif.

Une première technique connue consiste à intégrer dans un même boîtier deux terminaux indépendants, à savoir un terminal de radiocommunication (un terminal GSM par exemple) et un terminal de localisation (un terminal GPS par exemple), et à les relier à travers une ligne de données. D a également été proposé, dans ce cas, d'utiliser le terminal de radiocommunication pour transmettre vers un centre d'exploitation les informations de localisation. En d'autres termes, on transmet les informations de localisation à travers le réseau de radiocommunication (par exemple via des canaux de contrôle ou un service de messages courts).

On rappelle que, de façon classique, un terminal de localisation reçoit des signaux de localisation émis par un ou plusieurs points de référence. On connaît notamment le système GPS (pour "Global Positioning System" en langue anglaise), qui met en oeuvre une constellation de 24 satellites, répartis de façon qu'en un point donné, on puisse recevoir à tout instant des signaux émis par trois satellites distincts. En effet, un terminal de localisation de type GPS est capable de se localiser à partir de signaux de localisation reçus de trois satellites distincts.

L'inconvénient majeur de cette première technique connue est de présenter un surcoût significatif par rapport à un terminal de radiocommunication simple. En effet, le terminal de localisation comprend des moyens de réception et des moyens de traitement (en bande de base généralement) alors que le terminal de radiocommunication en comprend également.

Une seconde technique connue vise, mais sans y parvenir totalement, à remédier à cet inconvénient. En effet, il s'agit d'utiliser un même ensemble de traitement en bande de base, soit avec une chaîne de réception de signaux de localisation (fonctionnement en mode localisation), soit avec une chaîne d'émission/réception de signaux de radiocommunication (fonctionnement en mode radiocommunication). Le terminal comprend des moyens de commutation permettant de sélectionner l'un des deux modes de fonctionnement (à savoir localisation ou radiocommunication).

Ainsi, par rapport à la première technique connue, on fait l'économie d'un ensemble de traitement en bande de base. En contrepartie, cette seconde technique connue présente l'inconvénient majeur de ne pas permettre un fonctionnement simultané en localisation et en radiocommunication.

On connait du document EP-A-0 748 727 une station mobile comprenant des moyens de réception et d'émission de signaux de radiocommunication, des moyens de réception de signaux de localisation distincts des moyens de réception de signaux de radiocommunication, et des moyens de traitement connectés de façon permanente aux moyens de réception de signaux de radiocommunication et aux moyens de réception de signaux de localisation. On connait du document US-A-5 301 368 une station mobile avec des moyens d'émission et de réception de signaux de radiocommunication, des moyens de réception distincts de signaux de localisation, et des moyens de traitement connectés en alternance soit aux moyens d'émission et de réception, soit aux moyens de réception des signaux de localisation.

L'invention a notamment pour objectif de pallier ces différents inconvénients de l'état de la technique.

Plus précisément, l'un des objectifs de la présente invention est de fournir une station mobile intégrant des fonctions de radiocommunication et de localisation, et qui présente un surcoût faible par rapport à une station mobile intégrant uniquement la fonction de radiocommunication.

L'invention a également pour objectif de fournir une telle station mobile, pouvant fonctionner simultanément en localisation et en radiocommunication.

Un autre objectif de l'invention est de fournir une telle station mobile, permettant la transmission d'informations de localisation vers un centre d'exploitation, simultanément à des communications de voies et/ou de données.

Ces différents objectifs, ainsi que d'autres qui apparaîtront par la suite, sont atteints selon l'invention à l'aide d'une station mobile d'un système de radiocommunication cellulaire numérique, du type comprenant :
- des moyens d'émission et de réception de signaux de radiocommunication, selon un mode d'accès multiple à répartition dans le temps (AMRT),
- des moyens de réception de signaux de localisation émis par un système de localisation,
- des moyens de traitement desdits signaux de radiocommunication et desdits signaux de localisation,
lesdits moyens de traitement sont connectés de façon permanente auxdits moyens d'émission et de réception de signaux de radiocommunication et auxdits moyens de réception de signaux de localisation, lesdits moyens de traitement exploitant des signaux de localisation reçus pendant des moments de non-émission et de non-réception desdits signaux de radiocommunication, caractérisée en ce que les moyens d'émission et de réception de signaux de radiocommunication et les moyens de réception de signaux de localisation émis par un système de localisation comprennent des moyens de réception uniques, communs auxdits signaux de radiocommunication et auxdits signaux de localisation.

Le principe général de l'invention consiste donc à profiter des moments d'inactivité des moyens d'émission et de réception de signaux de radiocommunication pour effectuer les mesures de localisation. Ainsi la station mobile de l'invention peut fonctionner simultanément en localisation et en radiocommunication. Il est à souligner que ces moments d'inactivité en radiocommunication existent toujours dès lors que le système de radiocommunication cellulaire numérique est du type fonctionnant selon le mode d'accès multiple à répartition dans le temps (AMRT, ou TDMA, pour "Time Division Multiple Access" en langue anglaise).

On notera que l'invention ne nécessite qu'un ensemble de traitement, sans pour autant qu'il y ait commutation entre deux modes de fonctionnement (localisation et radiocommunication). En effet, les moyens de traitement reçoivent en permanence des signaux de localisation, mais seuls certains d'entre eux sont exploités, à savoir au moins certains de ceux reçus pendant les moments de non-émission et de non-réception des signaux de radiocommunication. On rappelle que dans le mode AMRT, chaque station mobile se voit attribuer de tels moments, correspondant à une segmentation temporelle du spectre, dans le sens montant (station mobile vers station de base) comme dans le sens descendant (station de base vers station mobile).

Dans un mode de réalisation préférentiel de l'invention, lesdits signaux de radiocommunication étant structurés, en émission et en réception, en trames successives, chaque trame d'émission, respectivement de réception, comprenant au moins un intervalle de temps d'émission, respectivement de réception, par ladite station mobile de signaux de radiocommunication,
les signaux de localisation exploités par les moyens de traitement sont reçus pendant des intervalles de temps libres, c'est-à-dire ne correspondant ni aux intervalles de temps d'émission, ni aux intervalles de temps de réception des signaux de radiocommunication.

Ainsi, on fait l'économie d'un récepteur. En contrepartie, l'unique récepteur utilisé doit généralement être multibande, de façon à pouvoir recevoir les signaux de radiocommunication et les signaux de localisation.

Avantageusement, lesdits moyens de traitement comprennent des moyens d'extraction de données de localisation contenues dans lesdits signaux de localisation exploités, et d'insertion desdites données de localisation, éventuellement transformées, dans des signaux de radiocommunication émis par lesdits moyens d'émission vers un centre d'exploitation.

De cette façon, on utilise le réseau de radiocommunication pour retransmettre les données de localisation vers un centre d'exploitation.

Préférentiellement, lesdites données de localisation sont émises vers ledit centre d'exploitation grâce à au moins un canal de contrôle et/ou grâce à un service de messages courts.

De façon préférentielle, ledit système de localisation est du type comprenant un réseau de satellites émettant lesdits signaux de localisation (GPS).

Avantageusement, ledit système de radiocommunication cellulaire numérique appartient au groupe comprenant les systèmes de type GSM et les systèmes de type PCN.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique d'un mode de réalisation particulier d'une station mobile selon l'invention; et
- la figure 2 permet d'expliciter, à travers un exemple, les moments d'exploitation des signaux de localisation, correspondant aux moments de non-émission et de non-réception des signaux de radiocommunication.

L'invention concerne donc une station mobile intégrant des fonctions de radiocommunication et de localisation. On rappelle que le système de radiocommunication cellulaire numérique auquel appartient cette station mobile doit fonctionner selon un mode d'accès multiple à répartition dans le temps (AMRT).

Dans la suite de la description, on considère le cas d'un système de radiocommunication cellulaire numérique de type GSM, et d'ùn système de localisation de type GPS. Il est clair cependant que l'invention peut s'appliquer avec d'autres types de système de radiocommunication cellulaire numérique et avec avec d'autres types de système de localisation.

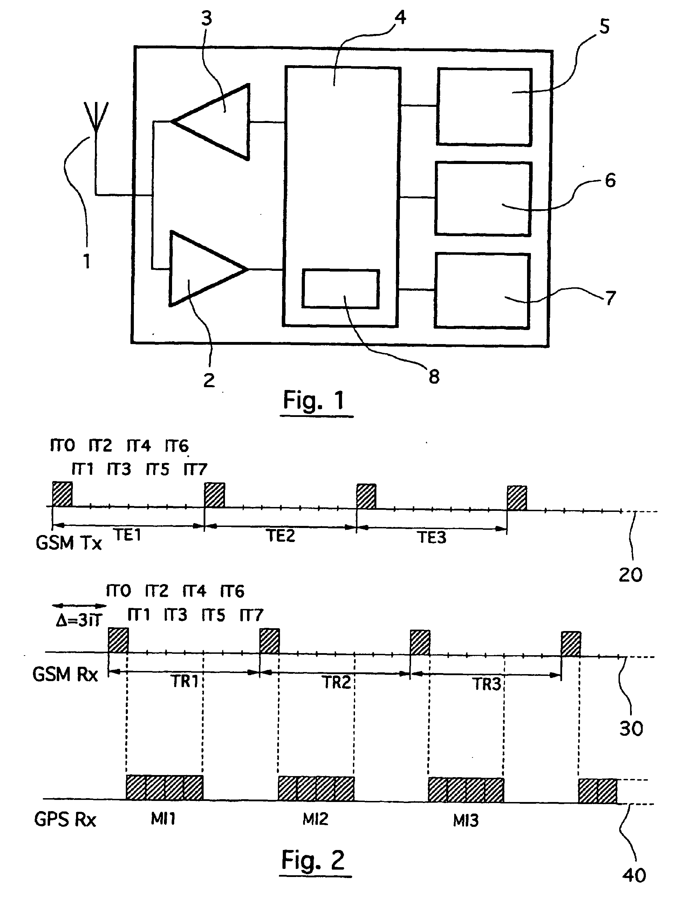

Dans le mode de réalisation particulier présenté sur la figure 1, la station mobile de l'invention comprend notamment :
- une antenne 1,
- un unique récepteur large bande (récepteur bifréquence GSM/GPS) 2, permettant la réception de signaux de radiocommunication (ou signaux GSM) et de signaux de localisation (ou signaux GPS),
- un émetteur (ou émetteur GSM) 3 de signaux de radiocommunication (ou signaux GSM),
- des moyens 4 (généralement construits autour d'un processeur) de traitement en bande de base des signaux de radiocommunication et des signaux de localisation,
- un clavier 5,
- un écran 6,
- un module d'identification d'abonné (ou carte SIM) 7.

Selon l'invention, les moyens 4 de traitement sont connectés de façon permanente au récepteur large bande 2 et à l'émetteur 3. Ils exploitent des signaux de localisation reçus pendant des moments de non-émission et de non-réception des signaux de radiocommunication. On rappelle en effet que de façon classique, en mode AMRT, chaque station mobile émet et reçoit des signaux de radiocommunication uniquement pendant des intervalles de temps prédéterminés. D existe donc des moments d'inactivité des moyens 4 de traitement du point de vue radiocommunication, que l'on met à profit pour exploiter des signaux de localisation.

La figure 2 permet d'expliciter, à travers un exemple, les moments d'exploitation des signaux de localisation, correspondant aux moments de non-émission et de non-réception des signaux de radiocommunication.

Sur la première ligne 20 (GSM Tx), qui correspond à la voie montante (station mobile vers station de base), on a présenté les moments d'émission de signaux de radiocommunication. Sur la seconde ligne 30 (GSM Rx), qui correspond à la voie descendante (station de base vers station mobile), on a présenté les moments de réception de signaux de radiocommunication. Sur la troisième ligne 40 (GPS Rx), on a présenté les moments d'exploitation de signaux de localisation.

On se place dans le cas particulier d'un système de type GSM. Pour la voie montante (fig.2, première ligne 20) comme pour la voie descendante (fig.2, seconde ligne 30), on considère une structure en trames successives TE1, TE2, TE3, etc (à l'émission) et TR1, TR2, TR3, etc (à la réception) de 8 intervalles de temps (ou time slot) IT0 à IT7 chacune. La récurrence d'un intervalle de temps particulier (par exemple le premier IT0) dans chaque trame constitue un canal physique sur lequel est transmis soit un canal logique soit plusieurs canaux logiques multiplexés. La numérotation est décalée de trois intervalles de temps (Δ = 3 IT) entre la voie montante et la voie descendante, afin d'éviter que la station mobile émette et reçoive en même temps.

Dans l'exemple de la figure 2, on suppose que la station mobile considérée émet pendant le premier intervalle IT0 (hachuré) de chaque trame TE1, TE2, TE3, etc de la voie montante (fig.2, première ligne 20), et reçoit pendant le premier intervalle IT0 (hachuré) de chaque trame TR1, TR2, TR3, etc de la voie descendante (fig.2, seconde ligne 30).

Ainsi, dans cet exemple, on appelle moments d'inactivité MI1, MI2, MI3, etc (fig2., troisième ligne 40) du point de vue radiocommunication, les six intervalles de temps n° 1, 2, 4, 5, 6 et 7 de chaque trame TE1, TE2, TE3, etc de la voie montante (les deux autres intervalles de temps, n° 0 et 3, correspondant à l'émission et à la réception GSM respectivement). Comme présenté sur la troisième ligne 40, on peut par exemple décider d'exploiter les signaux de localisation reçus pendant les quatres derniers intervalles IT4 à IT7 (hachurés) de chaque trame TE1, TE2, TE3, etc de la voie montante.

L'exploitation des signaux de localisation par les moyens 4 de traitement consiste par exemple, grâce à des moyens 8 d'extraction et d'insertion appropriés, à extraire des données de localisation contenues dans les signaux de localisation reçus, puis à insérer ces données de localisation, éventuellement transformées, dans des signaux de radiocommunication émis (par l'émetteur 3) vers un centre d'exploitation (par exemple un centre de localisation des stations mobiles volées).

Ainsi, le calcul d'une position géographique à partir des données de localisation peut être effectué :
- soit par le centre d'exploitation. Dans ce cas, les moyens 4 de traitement (de la station mobile) ne font que retransmettre telles quelles les données de localisation ;
- soit par les moyens 4 de traitement (de la station mobile). Dans ce cas, le centre d'exploitation reçoit des données de localisation transformées, correspondant au résultat du calcul effectué dans les moyens 4 de traitement.

L'acheminement des données de localisation (transformées ou non) via le réseau de radiocommunication est par exemple effectué :
- grâce à un canal de contrôle (de type dédié autonome (SDCCH, pour "Stand-alone Dedicated Control Channel"), associé lent (SACCH, pour "Slow Associated Control Channel"), associé rapide (FACCH, pour "Fast Associated Control Channel"), etc), lorsque la station mobile est en mode communication ;
- ou grâce à un service de messages courts originaires de la station mobile (ou SMS-MO, pour "Short Message Service - Mobile Originated"), lorsque la station mobile est en mode veille ;
- ou dans le cadre d'un canal de trafic établissant une liaison de données entre le terminal et l'unité de traitement ;
- ou exploitant tout autre canal support de données offert par le système (mode circuit, mode paquet émulé ou non).

## Revendications

1. Station mobile d'un système de radiocommunication cellulaire numérique, du type comprenant :
- des moyens d'émission (3) de réception (2) de signaux de radiocommunication, selon un mode d'accès multiple à répartition dans le temps (AMRT),
- des moyens de réception (2) de signaux de localisation émis par un système de localisation,
- des moyens (4) de traitement desdits signaux de radiocommunication et desdits signaux de localisation,
lesdits moyens (4) de traitement sont connectés de façon permanente auxdits moyens d'émission (3) et de réception (2) de signaux de radiocommunication et auxdits moyens (2) de réception de signaux de localisation, lesdits moyens (4) de traitement exploitant des signaux de localisation reçus pendant des moments (MI1, MI2, ...) de non-émission et de non-réception desdits signaux de radiocommunication, **caractérisée en ce que** les moyens d'émission et de réception de signaux de radiocommunication et les moyens de réception de signaux de localisation émis par un système de localisation comprennent des moyens (2) de réception uniques, communs auxdits signaux de radiocommunication et auxdits signaux de localisation.

2. Station mobile selon la revendication 1, lesdits signaux de radiocommunication étant structurés, en émission et en réception, en trames successives, chaque trame d'émission (TE1, TE2, ...), respectivement de réception (TR1, TR2, ...), comprenant au moins un intervalle de temps d'émission (IT0), respectivement de réception (IT0), par ladite station mobile de signaux de radiocommunication,
**caractérisée en ce que** les signaux de localisation exploités par les moyens (4) de traitement sont reçus pendant des intervalles de temps libres, c'est-à-dire ne correspondant ni aux intervalles de temps d'émission (ITO), ni aux intervalles de temps de réception (IT) des signaux de radiocommunication.

3. Station mobile selon l'une quelconque des revendications 1 ou 2, **caractérisée en ce que** lesdits moyens (4) de traitement comprennent des moyens (8) d'extraction de données de localisation contenues dans lesdits signaux de localisation exploités, et d'insertion desdites données de localisation, éventuellement transformées, dans des signaux de radiocommunication émis par lesdits moyens d'émission vers un centre d'exploitation.

4. Station mobile selon la revendication 3, **caractérisée en ce que** lesdites données de localisation sont émises vers ledit centre d'exploitation grâce à au moins un canal de contrôle et/ou grâce à un service de messages courts et/ou grâce à un service de données (mode circuit ou mode paquet).

5. Station mobile selon l'une quelconque des revendications 1 à 4, **caractérisée en ce que** ledit système de localisation est du type comprenant un réseau de satellites émettant lesdits signaux de localisation (GPS).

6. Station mobile selon l'une quelconque des revendications 1 à 5, **caractérisée en ce que** ledit système de radiocommunication cellulaire numérique appartient au groupe comprenant les systèmes de type GSM et les systèmes de type PCN, DECT.

## Claims

1. mobile station of a digital cellular radio-communication system, of the type comprising:
- means for transmitting (3) and means for receiving (2) radio-communication signals, according to a time division multiple access (TDMA) mode ;
- means for receiving (2) localisation signals transmitted by a localisation system;
- means for handling (4) said radio-communication signals and said localisation signals
said means for handling (4) are constantly connected to said means for transmitting (3) and said means for receiving (2) radio-communication signals and to said means for receiving (2) localisation signals, said means for handling (4) manipulating localisation signals received during the periods (MI1, MI2...) when there is no transmitting nor receiving of said radio-communication signals, **characterised in that** the means for transmitting and receiving radio-communication signals and the means for receiving localisation signals transmitted by a localisation system comprise unique means for receiving (2), common to said radio-communication signals and said localisation signals.

2. Mobile station according to claim 1, said radio-communication signals being structured, on transmitting and on receiving, in successive frames, each transmitting frame (TE1, TE2...), respectively receiving frame (TR1, TR2...), comprising at least a transmitting time interval (ITO), respectively receiving time interval (ITO), by said radio-communication signal mobile station,
**characterised in that** the localisation signals used by the means for handling (4) are received during the non-occupied time intervals, that being those not corresponding to the transmitting time intervals (IT0) nor the receiving time intervals (IT0) of the radio-communication signals.

3. Mobile station according to any one of claims 1 or 2, **characterised in that** said means for handling (4) comprise means for extracting (8) localisation data contained in said exploited localisation signals, and means for inserting said localisation data, possibly transformed, in the radio-communication signals transmitted by said transmitting means towards an operating centre.

4. Mobile station according to claim 3, **characterised in that** said localisation data is transmitted towards said operating centre via at least one control channel and/or via a short message service and/or via to a data service (circuit mode or packet mode).

5. Mobile station according to any one of claims 1 or 4, **characterised in that** said localisation system is of the type that comprises a satellite network transmitting said localisation signals (GPS).

6. Mobile station according to any one of claims 1 or 5, **characterised in that** said digital cellular radio-communication system belongs to the group comprising the GSM type systems and the PCN, DECT type systems.

## Patentansprüche

1. Mobilstation für ein digitales zellulares Funkkommunikationssystem vom Typ mit:
- Mitteln zum Senden (3) und Empfangen (2) von Funkkommunikationssignalen in einem Zeitmultiplex-Vielfachzugriffsmodus (TDMA),
- Mitteln zum Empfangen (2) von von einem Lokalisierungssystem gesendeten Lokalisierungssignalen,
- Mitteln (4) zum Verarbeiten der Funkkommunikationssignale und der Lokalisierungssignale,
wobei die Mittel (4) zum Verarbeiten permanent mit den Mitteln zum Senden (3) und zum Empfangen (2) der Funkkommunikationssignale und den Mitteln (2) zum Empfangen der Lokalisierungssignale verbunden sind, wobei die Mittel (4) zum Verarbeiten die in Zeiten (MI1, MI2,...) des Nicht-Sendens und Nicht-Empfangens der Funkkommunikationssignale empfangenen Lokalisierungssignale auswerten, **dadurch gekennzeichnet, dass** die Mittel zum Senden und Empfangen von Funkkommunikationssignalen und die Mittel zum Empfangen von von einem Lokalisierungssystem gesendeten Lokalisierungssignalen einzige Empfangsmittel (2) umfassen, die den Funkkommunikationssignalen und den Lokalisierungssignalen gemeinsam sind.

2. Mobilstation nach Anspruch 1, bei der die Funkkommunikationssignale beim Senden und Empfangen in aufeinanderfolgenden Rahmen strukturiert sind, wobei jeder Senderahmen (TE1, TE2, ...) bzw. Empfangsrahmen (TR1, TR2, ...) wenigstens ein Zeitintervall des Sendens (IT0) bzw. des Empfangens (IT0) von Funkkommunikationssignalen durch die Mobilstation umfasst, **dadurch gekennzeichnet, dass** die von den Verarbeitungsmitteln (4) ausgewerteten Lokalisierungssignale in freien Zeitintervallen empfangen werden, die weder den Sendezeitintervallen (IT0) noch den Empfangszeitintervallen (IT) der Funkkommunikationssignale entsprechen.

3. Mobilstation nach einem beliebigen der Ansprüche 1 oder 2, **dadurch gekennzeichnet, dass** die Verarbeitungsmittel (4) Mittel (8) zum Extrahieren von in den ausgewerteten Lokalisierungssignalen enthaltenen Lokalisierungsdaten und zum Einfügen der ggf. transformierten Lokalisierungsdaten in von den Sendemitteln an ein Auswertungszentrum gesendete Funkkommunikationssignale umfassen.

4. Mobilstation nach Anspruch 3, **dadurch gekennzeichnet, dass** die Lokalisierungssignale an das Auswertungszentrum über wenigstens einen Steuerkanal und/oder über einen Kurznachrichtendienst und/oder einen Datendienst (Verbindungs-Modus oder Paketmodus) gesendet werden.

5. Mobilstation nach einem beliebigen der Ansprüche 1 bis 4, **dadurch gekennzeichnet, dass** das Lokalisierungssystem vom Typ mit einem Netz von die Lokalisierungssignale sendenden Satelliten (GPS) ist.

6. Mobilstation nach einem beliebigen der Ansprüche 1 bis 5, **dadurch gekennzeichnet, dass** das digitale zellulare Funkkommunikationssystem zu der Gruppe gehört, welche die Systeme vom Typ GSM und die Systeme vom Typ PCN, DECT umfasst.
